# EUROPEAN PATENT SPECIFICATION

(11) **EP 4 195 499 B1**
(45) Date of publication and mention of the grant of the patent: **04.11.2026**
(21) Application number: 21213712.9
(22) Date of filing: 10.12.2021
(51) Int. Cl.: H02P 29/024, G05B 23/02

(54) **ELECTRIC MOTOR WITH A MOTOR TERMINAL BOX**
ELEKTROMOTOR MIT MOTORKLEMMENKASTEN
MOTEUR ÉLECTRIQUE DOTÉ D'UN BOITIER DE CONNEXION DE MOTEUR

(43) Date of publication of application: 14.06.2023
(73) Proprietor: ABB SCHWEIZ AG, 5400 Baden (CH)
(72) Inventor: SUTTON, Felix, 8048 Zürich (CH); SOMMER, Philipp, 8003 Zürich (CH); MARET, Yannick, 5405 Dättwil (CH)
(74) Representative: Zimmermann & Partner Patentanwälte mbB

(56) References cited:
- EP-A2- 0 841 574
- CN-A- 103 513 180
- CN-U- 203 396 914
- GB-A- 2 215 148
- JP-A- 2019 087 684

## Description

### TECHNICAL FIELD

Embodiments of the present disclosure relate to an electric motor with a motor terminal box and a diagnostics signaling unit at least partly located within the motor terminal box.

### BACKGROUND

Electric motors are an integral component of a wide range of industrial systems. The reliability of such electric motors is extremely important due to the high efficiency and safety-critical nature of industrial systems, particularly in the oil & gas, food and beverage, (discrete) manufacturing, and pharmaceutical industries.

Like any electro-mechanical device, electric motors are susceptible to failures. The most common failure on an electric motor is the bearing, while other failure types include stator winding deterioration or rotor damage. Furthermore, depending on a load, electric motors can be over- or under-dimensioned. In the case of an over-dimensioned motor, it may consume more energy than strictly needed, while an under-dimensioned motor may develop an early failure.

In order to minimize downtime and/or operational costs, it would be most advantageous to allow identification of failures, health and/or load conditions of the electric motor in a low-cost, easy to commission, and intuitive manner is most advantageous.

EP 0 841 574 A2 relates to a diagnostic apparatus for an electric motor.

CN 103 513 180 A describes a motor operation state monitoring and fault detecting system.

CN 203 396 914 U describes a motor running state monitoring and fault detection system

JP 2019 087684 A discloses a power module for power converter device with self diagnosis portion that determines the deterioration of the MOSFET based on the electric signal output of a light receiving portion.

### GENERAL DESCRIPTION

The idea of the present disclosure relates to an electric motor having a motor terminal box and a diagnostics-signaling unit at least partly located within the motor terminal box. The diagnostics-signaling unit comprises a diagnostics device and an optical output unit. Moreover, the diagnostics device is configured to determine an operating condition of the electric motor and to provide an optical-output control signal indicative of the operating condition. The optical output unit receives the optical-output control signal from the diagnostics device and is configured to provide an optical output signal according to the optical-output control signal.

The present disclosure is based on the recognition that IEC-standard and NEMA-standard motors are designed with a motor terminal box, also termed conduit box, which is used to connect an external electric power source, such as a power grid, to a rotor and/or a stator of the electric motor. The idea of the present disclosure is to monitor the operating condition of an industrial motor using a selection of low-cost sensors and electronics that are at least partly integrated into the motor terminal box.

In the following, different developments will be described. The focus of those developments is directed to different realizations of the optical output unit to relay information about the determined operating condition.

The term operating condition as used in this disclosure is to be understood as a quantity describing an overall condition of the electric motor with regard to its health and/or its load condition.

In one development of the electric motor according to the idea of the present disclosure, the optical output unit comprises a display unit that receives the optical-output control signal and is configured to display, as the optical output signal, a visualization of the operating condition. A display unit is particularly adapted to visualize a plurality of information related to the operating condition of the electric motor.

In another preferred development, the optical output unit comprises a light-emitting device that is configured to emit an infrared light signal as the optical output signal. The described development is particularly advantageous, because it allows relaying information about the operating condition of the electric motor via the light-emitting device to an external device, such as a smart phone or any other computing device.

In yet another preferred development, the optical output unit comprises a light-emitting device that is configured to emit a human-perceivable light signal as the optical output signal. By using a light-emitting device that is configured to emit human-perceivable light as the optical output signal, the operating condition of the electric motor can be made visible to, for example, nearby service personnel operating the electric motor.

In the following, preferred variants of how the human-perceivable light signal can be created and relayed by the optical output unit will be described.

In one variant, the light-emitting device is configured to emit light in a plurality of different colors. Moreover, the diagnostics device is configured to provide such an optical-output control signal that information about the operating condition of the electric motor is encoded within the different colors of the light signal emitted by the light-emitting device. This variant is particularly advantageous, because it enables an efficient visualization of the operating condition of the electric motor in a traffic-light-like fashion.

In another variant, the diagnostics device is, additionally or alternatively, configured to provide such an optical-output control signal that information about the operating condition of the electric motor is encoded in a modulation pattern of the light signal emitted by the light-emitting device. The encoding of information regarding the operation condition using a modulation pattern is applicable to, besides a human-perceivable light signal, also to an infrared signal light. Using an additionally modulation pattern increases the number of information that can be simultaneously be visualized. This is particularly advantageous, when only a single light-emitting device is used.

In one particularly preferred version of this variant, the modulation pattern corresponds to a blinking pattern.

Additionally or alternatively to a modulation pattern that is recognizable by a human, in another version, at least a part of the modulation pattern is machine-recognizable, such as with a camera of a smart phone. This additional machine-recognizable modulation pattern can be used to transmit additionally information, which can be read out by an external device. In one version, for example, the diagnostics device is configured to encode at least a part of the result of the diagnostics algorithm using a complex blinking pattern that is decodable using a smart phone with a smart phone camera and a software application for analyzing the blinking pattern.

In one such version, the diagnostics device is configured to provide the optical output signal such that the optical output unit sends out the light signal in a pulsed manner according to a pre-determined frequency, wherein the information about the operating condition is encoded in a presence or an absence of pulses.

According to the invention, the optical output unit of the diagnostics-signaling unit, additionally or alternatively, comprises a transparent optical element for giving off the light signal to an outside of the electric motor, wherein the transparent optical element is a transparent optical spacer element that is located between a terminal box body and a terminal box lid of the motor terminal box. This variant is advantageous, because it only requires little adaptation of the original design of the motor terminal box. It can be used for infrared as well as human-perceivable light.

The term transparent is to be understood with regard to this variant, but also in regard to other variants described in the present disclosure, to also include those optical elements that are semi-transparent. Also, in this variant, the optical output unit is preferably located within the motor terminal box.

In another variant, the electric motor comprises, additionally or alternatively, a transparent optical element for giving off the light signal to an outside of the electric motor, wherein the transparent optical element is comprised within a terminal box body or within a terminal box lid of the motor terminal box. This variant is suitable for an infrared as well as a human-perceivable light signal.

In one version of this variant, the terminal box lid itself is the transparent optical element. This solution is particularly cost effective as the original design of the motor terminal box can be left unchanged and only the terminal box lid needs to be made from a transparent material.

In another version of this variant, the electric motor includes a panel-mount light-emitting device that comprises the light-emitting device and the transparent optical element.

In yet another version of this variant, the transparent optical element is an optical aperture. The use of an optical aperture is particularly advantageous, because it can be easily manufactured.

In a different version of this variant, the transparent optical element is in the shape of an elongated strip. An elongated strip is particularly advantageous, because it does not require a lateral exact alignment of the light source and the elongated strip. It is also more visible than an optical aperture. It is also advantageous is keeping mechanical integrity of the structure.

In yet another version of this variant, the motor terminal box comprises a plurality of transparent optical elements. Additionally, the light-emitting device is configured to selectively emit light through any one of the transparent optical elements. Moreover, the diagnostics device is configured to provide such an optical-output control signal such that information about the operating condition is encoded in the pattern related to through which optical element light is emitted. Using a plurality of lights is particularly advantageous to visualize a quantity that can take on a value within a range of different values, such as for example a load condition of the electric motor.

In another version of the development, the light-emitting device is located within the motor terminal box. In yet another version, additionally or alternatively, a waveguide is used to emit the light-signal from the motor terminal box.

In another variant of the development, the electric motor has, additionally or alternatively, a light-emitting tower that is mounted on a motor frame of the electric motor and that comprises the transparent optical element. In a different variant, the light-emitting tower is mounted on another part of a motor frame of the electric motor.

Lastly, in one development the diagnostics device is a smart terminal block. In this development, the smart terminal block comprises a terminal block housing. Furthermore, the smart terminal block comprises, arranged at the terminal block housing, a plurality of terminal connectors each having a first contact terminal and a second contact terminal. Each of the first contact terminals is configured to receive a respective power-source connection line of an external electric power source and each of the second contact terminals is configured to receive a respective motor connection line to the electric motor, for establishing an electrical connection between the external electric power source and the electric motor.

Additionally, the smart terminal block comprises, arranged at the terminal housing, a sensor input unit, a processor, and a signaling unit.

The sensor input unit is configured to receive sensor measurement data indicative of a diagnostics parameter from a sensor unit. The processor is configured to receive the sensor measurement data from the sensor input unit, to process the sensor measurement data, and to provide a processing output indicative of a result of the processing of the sensor measurement data. Lastly, the signaling unit receives the processing output and is configured to further relay the processing output.

The smart terminal block is advantageous, because it allows to add diagnostics capabilities to an electric motor while keeping the required additional steps during assembly of the electric motor to a minimum and only adding little cost. This advantage is realized through including the diagnostics capabilities into the terminal block of the electric motor, which is already a part of IEC-standard and NEMA-standard motors. In IEC-standard and NEMA-standard motors, the terminal block is located in the motor terminal box, also referred to as conduit box. The motor terminal box is an enclosed housing that receives the power source connection lines of the external electric power source and the motor connection lines and where the external electric power source is electrically connected to the electric motor through the plurality of terminal connectors. By adding the diagnostics capabilities, the terminal block becomes a smart terminal block. The proposed smart terminal block complements the main functionality by including intelligent sensing for monitoring the operating condition of the electric motor. Moreover, the smart terminal block can be added to an electric motor during assembly as well as retro-fitted.

In the following, further preferred developments of the smart terminal block will be described.

The diagnostics parameter can be any quantity measurable by a sensing device that can be used to determine the operating condition of the electric motor. Furthermore, the motor connection line it to be understood to also include those electrical connections that use brushes or similar to establish an electrical connection.

In preferred developments of the idea of the present disclosure, the plurality of the terminal connectors connects a rotor winding of a rotor of the electric motor and/or a stator winding of a stator of the electric motor to the external electric power source. In variants of these developments, the electrical connection is realized in a Y- and/or a D-configuration or any alternative supported by the motor.

In yet another preferred development, the processor of the smart terminal block is configured to process the sensor measurement data according to a diagnostics algorithm and to provide a diagnostics-result signal indicative of a result of the application of the diagnostics algorithm on the sensor measurement data. A processing of the sensor measurement data using diagnostics algorithm applied directly by the processor is advantageous, because it allows the smart terminal block to independently collect and analyze the sensor measurement data without the requirement of an additional external device. Examples of such diagnostics algorithms are given in, for example, WO 2020/128685 A1 and WO 2020/240404 A1.

In a variant of this development, the signaling unit receives the diagnostics-result signal provided by the processor and is configured to provide a human-perceivable diagnostics-indication signal that is indicative of the diagnostics-result signal. This variant is particularly advantageous, because it allows the smart terminal block to provide a human-perceivable signal indicative of an outcome of the application of the diagnostics algorithm directly at the electric motor, for example, to nearby service personal operating the electric motor.

In variants of this development, the signaling device is configured to provide a light signal or a sound signal, such as an alarm. In other variants, the signaling device is a display that is configured to visualize the processing output using text and/or graphics.

In another preferred development, the signaling unit is a wireless communication unit that receives the processing output of the processor and is configured to transmit the processing output wirelessly to an external reception device. Such a signaling unit is particularly advantages, because it allows the processor output to be further processed and analyzed by a different device. Moreover, it allows the electric motor on which the smart terminal block is mounted to be located at a different location than the external reception device.

Such a wireless output can be realized, for example, through a WIFI, a Bluetooth or a mobile telecommunication interface. Alternatively, the wireless output can also be realized through an infrared signal. Furthermore, the external reception device can be part of a computing device that allows an analysis of the processing output in the cloud.

In another development, the signaling unit is, alternatively or additionally, a wire-bound communication interface. Also, the wire-bound communication interface allows a further processing of the output of the processor at a different location. In variants of this development, the wire-bound communication interface is realized, for example, through a USB or ethernet interface. In other variants, the wire-bound interface is a display interface that allows the connection of a display to the smart terminal block.

In yet another preferred development, the smart terminal block comprises a sensor unit that is configured to measure the diagnostics parameter and to provide the sensor measurement data indicative of the diagnostics parameter to the sensor input unit. By also including the sensor unit into the smart terminal block, the number of steps required for an assembly of an electric motor can be further reduced. In variants of this embodiment, the sensor input is a conductor portion for conducting the sensor data to the processor.

In one variant of this development, the sensor unit comprises a vibration sensor, an acoustic sensor, a temperature sensor, humidity sensor and/or a magnetic flux sensor. In another variant of this development, the sensor unit comprises, alternatively or additionally, a current sensor that is configured to determine a current transmitted through at least one of the terminal connectors between the external electric power source and the electric motor. In another variant, the smart terminal block comprises a sensor unit and the sensor input unit is configured to provide the sensor measurement data of the sensor unit comprised within the smart terminal block as well as an external sensor unit to the processor. In this variant, the processor will be able to process sensor measurement data received from internal as well as external sensor units.

In a further development of the idea of the present disclosure, the smart terminal block comprises a power supply unit that is configured to provide electrical power to the processor and/or the signaling unit.

In a variant of this development, the electrical power supply unit comprises a power harvesting device. The use of a power harvest device is particularly advantageous, because it allows a further reduction of the number of assembly steps required to attach the smart terminal block to an electric motor. Moreover, the power harvesting device allows the smart terminal block to be power just by ambient energy sources. For example, in some variants, the power harvesting device is configured to harvest power from magnetic fields, vibrations, and/or temperature. In one of these variants, the power harvesting device comprises a coil for harvesting electrical power from magnetic fields.

In yet another variant of this development the electrical power supply unit comprises an electrical-energy storage unit. In some of those variants, the electrical-energy storage unit is a (non)-rechargeable battery or supercapacitor.

In another preferred variant of this development of the present disclosure, the electrical power supply unit is electrically connected to one of the terminal connectors and configured to use at least a part of the electrical power supplied by the external electrical power source to power the processor and/or the signaling unit.

In some of the variants of the smart terminal block that also comprise a sensor unit, the power supply is configured to provide electrical power also to the sensor unit.

In another development of the idea of the present disclosure, the processor is attached to an outside wall of the terminal block housing. Such an arrangement is particularly advantageous for an efficient assembly of the smart terminal block.

In case, the smart terminal block also comprises a sensor unit or an electrical power supply unit, in variants of this development, the sensor unit and/or the electrical power supply unit are also arranged at the outside wall of the terminal block housing.

In another development of the idea of the present disclosure, the smart terminal block comprises a mounting element for mechanically mounting the terminal block housing to the electric motor. Such a mounting element is advantageous to securely attach the smart terminal block to the electric motor. In those cases, in which the smart terminal block comprises a sensor unit with a vibration sensor, the mounting element is also advantageous so ensure that an intensity of vibration measured by the sensor unit does indeed represent the vibrations of the electric motor.

In other preferred developments, the terminal block housing is made of a non-conducting material, such as polycarbonate.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1A: shows a front view of an embodiment of an electric motor according to the idea of the present disclosure, wherein the electric motor comprises a diagnostics-signaling unit with a panel-mounted light configured to emit infrared radiation;
- Fig. 1B: shows a top view of the embodiment of the electric motor depicted in Fig. 1A;
- Fig. 2A: shows a front view of a different embodiment of an electric motor according to the idea of the present disclosure, wherein the electric motor comprises an optical output unit that is configured to emit a human-perceivable light signal;
- Fig. 2B: shows a top view of the embodiment of the electric motor depicted in Fig. 2A;
- Fig. 3: shows a front view of yet another embodiment of an electric motor according to the idea of the present disclosure, wherein the electric motor comprises an optical output unit with three panel-mounted lights each configured to emit light in a different color;
- Fig. 4: shows a front view of another embodiment of an electric motor according to the idea of the present disclosure, wherein the electric motor comprises motor terminal box with a transparent terminal box lid;
- Fig. 5A: shows a front view of another embodiment of an electric motor according to the idea of the present disclosure, wherein the electric motor comprises a transparent optical element that is a spacer element between a terminal box body and a terminal box lid of a motor terminal box comprised in the electric motor;
- Fig. 5B: shows a top view of the embodiment of the electric motor depicted in Fig. 5A;
- Fig. 6: shows a side view of yet another embodiment of an electric motor according to the idea of the present disclosure, wherein the electric motor has an optical output unit comprising an optical aperture;
- Fig. 7: shows a side view of another embodiment of an electric motor according to the idea of the present disclosure, wherein the electric motor has an optical output unit comprising a transparent optical element in the shape of elongated strips;
- Fig. 8: shows a side view of yet another embodiment of an electric motor according to the idea of the present disclosure, wherein the electric motor has an optical output unit comprising a light tower;
- Fig. 9: shows a top view of another embodiment of an electric motor according to the idea of the present disclosure, wherein the electric motor includes an optical output unit comprising waveguides for transmitting an optical output signal; and
- Fig. 10: shows a side view of yet another embodiment of an electric motor according to the idea of the present disclosure, wherein the electric motor includes an optical output unit comprising a display unit.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjugation with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

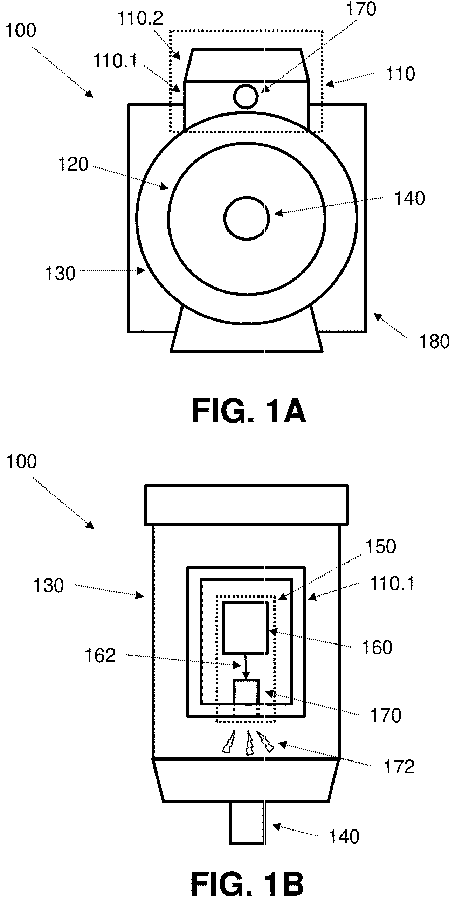

In the following, a first embodiment 100 of the electric motor according to the idea of the present disclosure will be described with reference to Fig. 1A and Fig. 1B.

Fig. 1A shows a front view of an embodiment 100 of an electric motor according to the idea of the present disclosure, wherein the electric motor 100 comprises a diagnostics-signaling unit 150 with a panel-mounted light 170 configured to emit infrared radiation 172.

The electric motor 100 is an IEC-standard motor comprising a shaft 140 for transmitting a mechanical torque generated by the electric motor 100 and, for generating that mechanical torque, a rotor 120 with a rotor winding (not visible) and a stator 130 with a stator winding (not visible).

Furthermore, the electric motor 100 comprises a motor terminal box 110 that is located on top of a motor frame 180 of the electric motor 100. The motor terminal box 110 comprises a terminal box body 110.1 and a terminal box lid 110.2. In other embodiments of the present disclosure, the electric motor is a NEMA-standard motor, wherein the motor terminal box is located on a side of the electric motor. Alternatively, in embodiments of the electric motors that are connected to an external electric power source through flying leads, the motor terminal box is located around the flying leads without a direct physical connection to the electric motor.

Inside the motor terminal box 110, a diagnostics-signaling unit 150 according to the idea of the present disclosure is located, which will be described in more detail with reference to Fig. 1B.

Fig. 1B shows a top view of the embodiment of the electric motor depicted in Fig. 1A.

In the top view of Fig. 1B, the terminal box lid 110.2 is removed allowing a view into an inside of the motor terminal box 110.

Inside the motor terminal box 110 of the electric motor 100, the diagnostics-signaling unit 150 is located. The diagnostics-signaling unit 150 comprises a diagnostics device 160 and the optical output unit 170. The diagnostics device 160 is configured to determine an operating condition of the electric motor 100, and to provide an optical-output control signal 162 indicative of the operating condition. In the embodiment 100 of the electric motor shown in Fig. 1A and Fig. 1B, the operating condition determined by the diagnostics device 160 is a health condition of the electric motor 100.

The optical output unit 170 receives the optical-output control signal 162 indicative of the health condition of the electric motor 100 and is configured to provide an optical output signal 172 according to the optical-output control signal 162. In the embodiment 100 of the electric motor shown in Fig. 1A and Fig. 1B, the optical output unit 170 is a panel-mounted light that is configured to emit the optical output signal 172 in the form of infrared radiation 172. The panel-mounted light is installed into a front side of the terminal box body and visible in the front view of the electric motor 100. Through the emission of the infrared light, the optical output unit 170 is configured to relay information about the health condition of the electric motor 100 to an external device for further processing and analysis or display. Such an external device can be, for example, a smart phone or any other computing device.

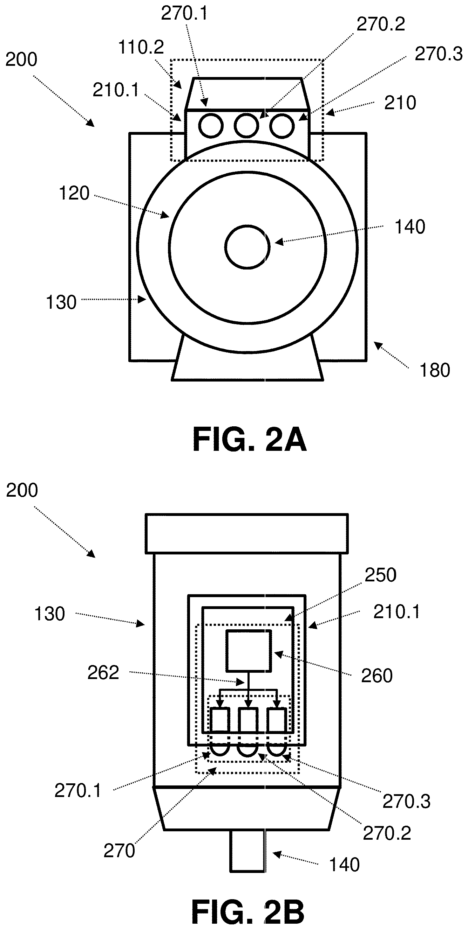

Alternatively to the transmission of the operating condition to an external device, other embodiments of the electric motor comprise a light-emitting device that is configured to emit a human-perceivable light signal. A selection of those embodiments will be described in the following with references to Fig. 2A-9. The first of those embodiments is shown in Fig. 2A and Fig. 2B.

Fig. 2A shows a front view of a different embodiment 200 of an electric motor according to the idea of the present disclosure, wherein the electric motor 200 comprises an optical output unit that is configured to emit a human-perceivable light signal.

The electric motor 200 also comprises a diagnostics-signaling unit 250 comprising a diagnostics device 260 that is configured to determine an operating condition of the electric motor 200, which, in this embodiment is a load condition of the electric motor 200. Moreover, the diagnostics device 260 is configured to provide an optical-output control signal 262 indicative of the load condition of the electric motor 200. Furthermore, the diagnostics-signaling unit 250 comprises an optical output unit 270, which receives the optical-output control signal 262 and is configured to provide a human-perceivable light signal. In the embodiment 200 of the electric motor shown in Fig. 2A and Fig. 2B, the optical output unit 270 comprises three panel-mounted lights 2701.1, 270.1, and 270.3. The three panel-mounted lights 270.1-270.3 are mounted to a front side of a terminal box body 210.1 of the motor terminal box 210 of the electric motor 200. Each of the panel-mounted lights is configured to emit light of an identical color. The diagnostics device 260 is configured to provide such an optical-output control signal 262 that the load condition of the electric motor 200 is indicated by the number of panel-mounted lights 270.1-270.3 which emit light. A detailed view of the diagnostics-signaling unit 250 is also given in Fig. 2B.

Fig. 2B shows a top view of the embodiment of the electric motor depicted in Fig. 2A.

In the top view shown in Fig. 2B, the terminal box lid 110.2 of the motor terminal box 210 of the electric motor 200 is removed to allow a view into the inside of the motor terminal box 210. Visible are the diagnostics device 260 and the optical output unit 270 comprising the three panel-mounted lights 270.1-270.3 located in the front side of the terminal box body 210.1.

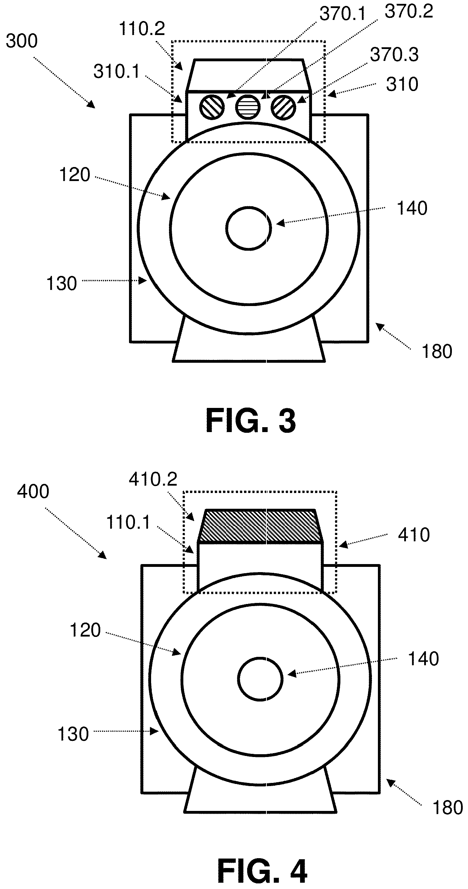

The three panel-mounted lights are only an example of how the optical output unit of the diagnostics-signaling unit can be realized. In the following, further examples will be described with reference to Figs. 3-9.

Fig. 3 shows a front view of yet another embodiment 300 of an electric motor according to the idea of the present disclosure, wherein the electric motor 300 comprises a diagnostics-signaling device with an optical output unit 370 having three panel-mounted lights 370.1-370.3 each configured to emit light in a different color.

The diagnostics-signaling unit of the electric motor 300 differs from that of the preceding embodiment in that a diagnostics device of the diagnostics-signaling unit is configured to determine an operating condition of the electric motor, wherein the operating condition is a health condition of the electric motor. Furthermore, the optical output unit of the diagnostics-signaling unit comprises three panel-mounted lights 370.1-370.3, visible in Fig. 3, which are each configured to emit light in a different color. All three panel-mounted lights 370.1-370.3 are mounted into a front side of a terminal box body 310.1 of a motor terminal box 310 of the electric motor 300. Moreover, the diagnostics device is configured to provide such an optical-output control signal that the health condition of the electric motor 300 is indicated by the which color of light is emitted by the optical output unit 370.

In the embodiment 300 of Fig. 3, the optical output unit 370 comprises panel-mounted lights. In other embodiments, the optical output unit comprises a light-emitting device located within the motor terminal box and a separate transparent optical element, which allows the light signal to be emitted from the motor terminal box. Such embodiments will be described in the following with reference to Figs. 4-7.

Fig. 4 shows a front view of yet another embodiment 400 of an electric motor according to the idea of the present disclosure, wherein the electric motor 400 comprises motor terminal box 410 with a transparent terminal box lid 410.2.

As has already been described above, the electric motor 400 comprises an optical output unit with a light-emitting device located within the motor terminal box 400. In this example, the light-emitting device is a tri-color LED, which is configured to provide human-perceivable light signal in three different colors. Additionally, the optical output unit of the electric motor 300 comprises a transparent optical element, which is the terminal box lid 410.2 through which the light emitted by the tri-color LED is emitted from the motor terminal box 410. Moreover, a diagnostics device also located within the motor terminal box 410 is configured to determine the health condition of the electric motor 400 and to provide an optical-output control signal which such that, depending on the health condition of the electric motor 400, the tri-color LED emits a different color of light.

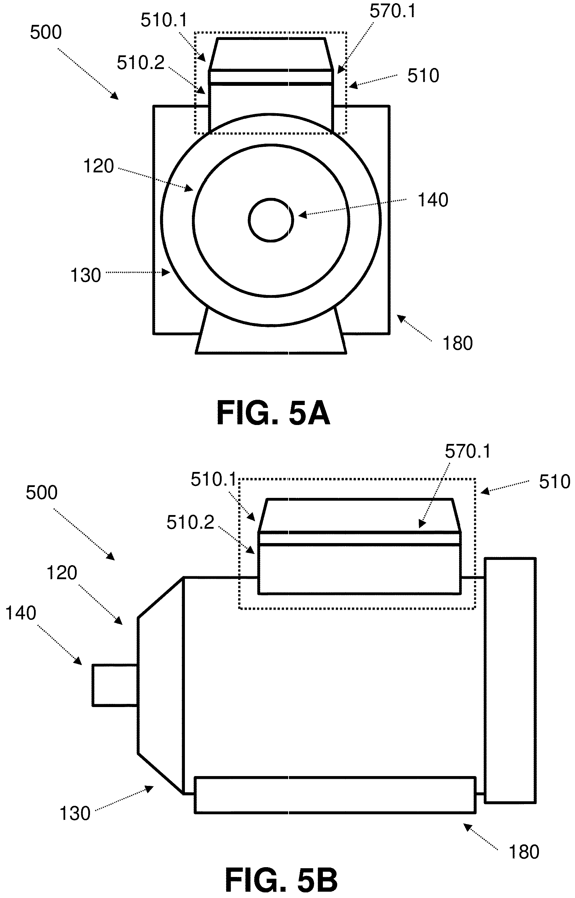

Yet another variant of an electric motor with a transparent optical element is shown in Fig. 5A and Fig. 5B.

Fig. 5A shows a front view of another embodiment 500 of an electric motor according to the idea of the present disclosure, wherein the electric motor 500 comprises a transparent optical element 570.1 that is a spacer element between a terminal box body 510.1 and a terminal box lid 510.2 of a motor terminal box 510 of the electric motor 500.

Fig. 5B shows a top view of the embodiment 500 of the electric motor depicted in Fig. 5A.

In the electric motor 500, the optical output unit only differs with regard to the transparent optical element. Instead of having a transparent terminal box lid, the electric motor comprises a transparent optical spacer element 570.1 that is located between the terminal box body 510.1 and a terminal box lid 510.2 of the motor terminal box 510. As can be seen in Fig. 5A and Fig. 5B, the transparent optical spacer element 570.1 is configured to emit light from the motor terminal box 510 in an angle of 360° around the entire motor terminal box 510. In other embodiments, the angle is also smaller than 360°.

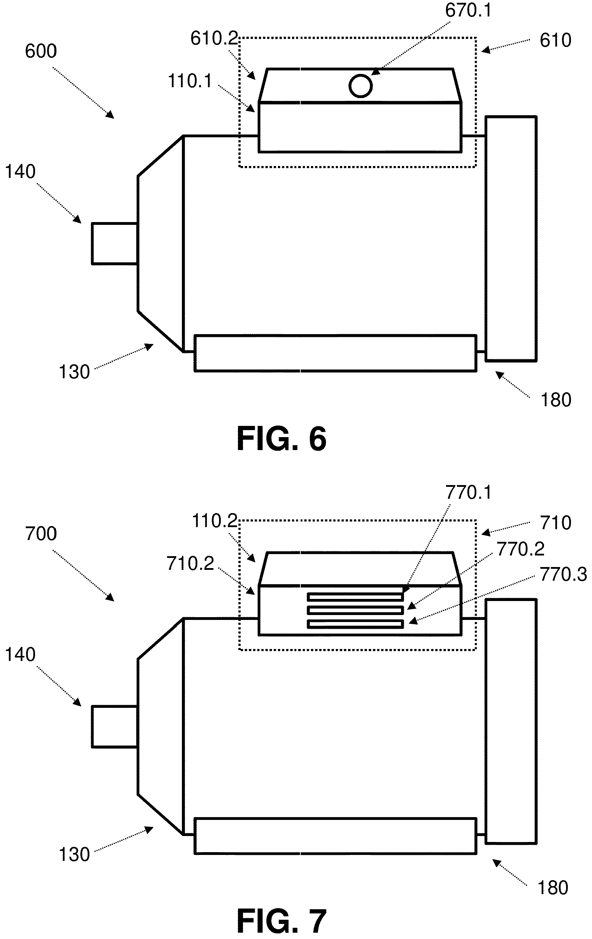

Another alternative to the transparent optical elements of the embodiments 400 and 500 of the electric motor is shown in Fig. 6.

Fig. 6 shows a side view of yet another embodiment 600 of an electric motor according to the idea of the present disclosure, wherein the electric motor 600 has an optical output unit comprising an optical aperture 670.1.

In the embodiment 600 of the electric motor, the human-perceivable light signal indicative of the operating condition of the electric motor 600 is emitted from a motor terminal box 610 of the electric motor via the optical aperture 670.1. As shown in Fig. 6, the optical aperture 670.1 is located in a terminal box lid 610.2 of the motor terminal box 610. In the case of the electric motor 600, the optical aperture 670.1 is formed by a transparent optical material that is fitted into a through hole of the terminal box lid 610.2. However, in other embodiments of the electric motor, the optical aperture is only formed by a through hole in the terminal box lid or the terminal box body.

A further alternative to the transparent optical elements of the embodiments 400 and 500 of the electric motor is shown in Fig. 7.

Fig. 7 shows a side view of yet another embodiment of an electric motor according to the idea of the present disclosure, wherein the electric motor has an optical output unit comprising a transparent optical element in the shape of elongated strips.

Instead of an optical aperture, the electric motor 700 of Fig. 7 comprises three transparent elongated strips 770.1-770.3 within one of the side walls of a terminal box body 710.1 of a motor terminal box 710. Moreover, a light-emitting device located within the motor terminal box 710 such that, depending on the operating condition of the electric motor 700, a different one of the elongated strips is lit up.

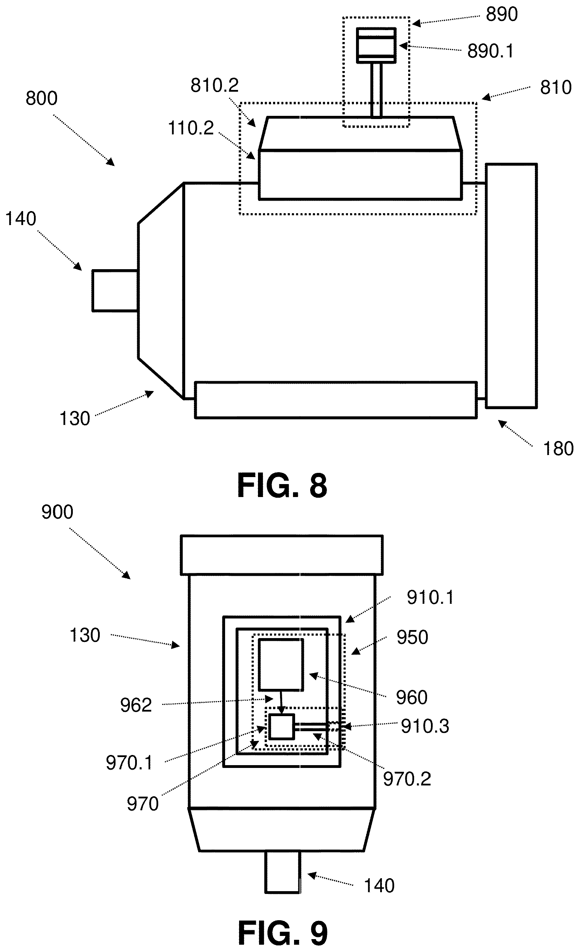

Alternatively to the transparent optical elements of the electric motors 400-700, the transparent optical elements can also be located at a different location than at the motor terminal box. In Fig. 8, an embodiment of such an electric motor is shown.

Fig. 8 shows a side view of yet another embodiment 800 of an electric motor according to the idea of the present disclosure, wherein the electric motor 800 has an optical output unit comprising a light tower 890.

The light tower 890 is located on a top side of a terminal box lid 810.1 of a motor terminal box 810 of the electric motor 800. Furthermore, the light tower 890 comprises a transparent optical element 890.1 through which light is emitted. Moreover, the electric motor 800 comprises a light-emitting device that is also located within the light tower 890, wherein the light-emitting device is configured to emit human-perceivable light indicative of the operating condition of the electric motor 800.

While the light-emitting device of the electric motor 800 is located in proximity to the transparent optical element 890.1, other embodiments of the electric motor according to the present disclosure are incorporating optical waveguides such that a proximity in the location of the light-emitting device and the transparent optical element is not required. Such an example will be described in the following with reference to Fig. 9.

Fig. 9 shows a top view of yet another embodiment 900 of an electric motor according to the idea of the present disclosure, wherein the electric motor 900 includes an optical output unit 970 comprising waveguides 970.2 for transmitting an optical output signal.

Fig. 9 shows the electric motor 900 from the top with a removed terminal box lid of a motor terminal box 910 of the electric motor 900 allowing a of view the inside of the motor terminal box 910. Located, respectively partly located, within the motor terminal box 900 is a diagnostics-signaling unit 950 comprising a diagnostics device 960 and an optical output unit 970, wherein the optical output unit 970 comprises a tri-color LED 970.1 and the waveguide 970.2. Like for the previously described embodiments, the diagnostics device 950 is configured to determine an operating condition, in this embodiment a health condition, of the electric motor 900 and provide an optical-output control signal 962 indicative of the health condition. The tri-color LED 970.1 is configured to emit a human-perceivable light signal indicative of the health condition. To emit that light signal from the motor terminal box 910, a first end of a waveguide 970.2 is located in proximity to the LED 970.1, while a second end of the waveguide 970.2 is led through a through hole 910.3 at one of the sides of the terminal box body 910. The waveguide 970.2 is configured to receive the light generated by the tri-color LED 970.1 and forwards that light to an outside of the motor terminal box 910.

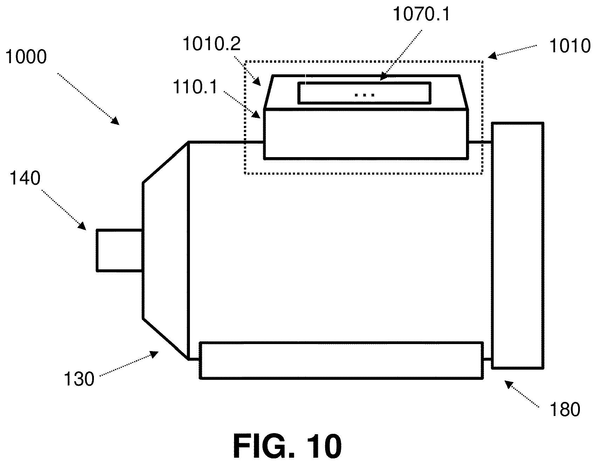

Alternatively to using a light-emitting device, also a display can be used to create a human-perceivable optical output signal. An electric motor that comprises such a display will be described in the following with reference to Fig. 10.

Fig. 10 shows a side view of yet another embodiment 1000 of an electric motor according to the idea of the present disclosure, wherein the electric motor 1000 includes an optical output unit comprising a display unit 1070.1.

The electric motor 1000 comprises a motor terminal box 1010 with a terminal box lid 1010.2 in which the display unit 1070.1 as part of an optical output unit is integrated into. The display unit 1070.1 is configured to visualize an operating condition of the electric motor 1000 as determined by a diagnostics devices located inside the motor terminal box 1010.

In summary, the idea of the present disclosure relates to an electric motor (100) having a motor terminal box (110) and a diagnostics-signaling unit (150), which is at least partly located within the motor terminal box (110). The diagnostics-signaling unit (150) comprises a diagnostics device (160) and an optical output unit (170). The diagnostics device (160) that is configured to determine an operating condition of the electric motor (100) and to provide an optical-output control signal (162) indicative of the operating condition. Furthermore, the optical output unit (170) that receives the optical-output control signal (162) and that is configured to provide an optical output signal according to the optical-output control signal (162).Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

## Claims

1. An electric motor (500) having a motor terminal box (510) and a diagnostics-signaling unit (150) at least partly located within the motor terminal box (510), the diagnostics-signaling unit (150) comprising
- a diagnostics device (160) that is configured
- to determine an operating condition of the electric motor (100), and
- to provide an optical-output control signal (162) indicative of the operating condition;
- an optical output unit (170) that receives the optical-output control signal (162) and that is configured to provide an optical output signal (172) according to the optical-output control signal (162); and
**characterized in that** the electric motor comprises a transparent optical element (570.1) for giving off the light signal (172) to an outside of the electric motor (500), wherein the transparent optical element is a transparent optical spacer element (570.1) that is located between a terminal box body (510.1) and a terminal box lid (510.2) of the motor terminal box (510).

2. The electric motor (1000) according to claim 1, wherein the optical output unit (170) comprises a display unit (1070.1) that receives the optical-output control signal (162) and is configured to display, as the optical output signal (172), a visualization of the operating condition.

3. The electric motor according to claim 1 or claim 2, wherein the optical output unit (170) comprises a light-emitting device that is configured to emit an infrared light signal as the optical output signal (172).

4. The electric motor (100) according to any of the preceding claims, wherein the optical output unit (270) comprises a light-emitting device (270.1-270.3) that is configured to emit a human-perceivable light signal as the optical output signal (172).

5. The electric motor (100) according to claim 4, wherein
- the light-emitting device (170) is configured to emit light in a plurality of different colors, and
- the diagnostics device (160) is configured to provide such an optical-output control signal (162) that information about the operating condition of the electric motor (100) is encoded within the different colors of the light signal (172) emitted by the light-emitting device (170).

6. The electric motor (100) according to any of the claims 3 to 5, wherein the diagnostics device (160) is configured to provide such an optical-output control signal (162) that information about the operating condition of the electric motor (100) is encoded in a modulation pattern of the light signal (172) emitted by the light-emitting device (170).

7. The electric motor (100) according to claim 6, wherein the modulation pattern corresponds to a blinking pattern.

8. The electric motor (300) according to any preceding claim, wherein
- the motor terminal box (310) comprises a plurality of transparent optical elements (380.2, 380.4, 380.6),
- the light-emitting device (380) is configured to selectively emit light through any one of the transparent optical elements (380.2, 380.4, 380.6), and
- the diagnostics device (360) is configured to provide such an optical-output control signal (362) such that information about the operating condition is encoded in the pattern related to through which optical element (380.2, 380.4, 380.6) light is emitted.

## Patentansprüche

1. Elektromotor (500) mit einem Motorklemmenkasten (510) und einer Diagnostiksignalisierungseinheit (150), die sich zumindest teilweise innerhalb des Motorklemmenkastens (510) befindet, wobei die Diagnostiksignalisierungseinheit (150) Folgendes umfasst
- eine Diagnosevorrichtung (160), die zu Folgendem ausgelegt ist
- Bestimmen des Betriebszustands des Elektromotors (100) und
- Vorsehen eines optischen Ausgabesteuersignals (162), das den Betriebszustand angibt;
- eine optische Ausgabeeinheit (170), die das optische Ausgabesteuersignal (162) empfängt und dazu ausgelegt ist, ein optisches Ausgabesignal (172) gemäß dem optischen Ausgabesteuersignal (162) vorzusehen; und **dadurch gekennzeichnet, dass** der Elektromotor ein transparentes optisches Element (570.1) zum Abgeben des Lichtsignals (172) an eine Außenseite des Elektromotors (500) umfasst, wobei das transparente optische Element ein transparentes optisches Abstandhalterelement (570.1) ist, das sich zwischen einem Klemmenkastenkörper (510.1) und einem Klemmenkastendeckel (510.2) des Motorklemmenkastens (510) befindet.

2. Elektromotor (1000) nach Anspruch 1, wobei die optische Ausgabeeinheit (170) eine Anzeigeeinheit (1070.1) umfasst, die das optische Ausgabesteuersignal (162) empfängt und dazu ausgelegt ist, als optisches Ausgabesignal (172) eine Visualisierung des Betriebszustands anzuzeigen.

3. Elektromotor nach Anspruch 1 oder Anspruch 2, wobei die optische Ausgabeeinheit (170) eine lichtemittierende Vorrichtung umfasst, die dazu ausgelegt ist, ein Infrarotlichtsignal als optisches Ausgabesignal (172) zu emittieren.

4. Elektromotor (100) nach einem der vorhergehenden Ansprüche, wobei die optische Ausgabeeinheit (270) eine lichtemittierende Vorrichtung (270.1-270.3) umfasst, die dazu ausgelegt ist, ein vom Menschen wahrnehmbares Lichtsignal als optisches Ausgabesignal (172) zu emittieren.

5. Elektromotor (100) nach Anspruch 4, wobei
- die lichtemittierende Vorrichtung (170) dazu ausgelegt ist, Licht in mehreren unterschiedlichen Farben zu emittieren, und
- die Diagnosevorrichtung (160) dazu ausgelegt ist, ein solches optisches Ausgabesteuersignal (162) vorzusehen, dass Informationen über den Betriebszustand des Elektromotors (100) innerhalb der verschiedenen Farben des Lichtsignals (172), das von der lichtemittierenden Vorrichtung (170) emittiert wird, codiert werden.

6. Elektromotor (100) nach einem der Ansprüche 3 bis 5, wobei die Diagnosevorrichtung (160) dazu ausgelegt ist, ein solches optisches Ausgabesteuersignal (162) vorzusehen, dass Informationen über den Betriebszustand des Elektromotors (100) in einem Modulationsmuster des Lichtsignals (172), das durch die lichtemittierende Vorrichtung (170) emittiert wird, codiert werden.

7. Elektromotor (100) nach Anspruch 6, wobei das Modulationsmuster einem Blinkmuster entspricht.

8. Elektromotor (300) nach einem der vorhergehenden Ansprüche, wobei
- der Motorklemmenkasten (310) mehrere transparente optische Elemente (380.2, 380.4, 380.6) umfasst,
- die lichtemittierende Vorrichtung (380) dazu ausgelegt ist, selektiv Licht durch eines der transparenten optischen Elemente (380.2, 380.4, 380.6) zu emittieren, und
- die Diagnosevorrichtung (360) dazu ausgelegt ist, ein solches optisches Ausgabesteuersignal (362) vorzusehen, dass Informationen über den Betriebszustand in dem Muster codiert werden, das sich darauf bezieht, durch welches optische Element (380.2, 380.4, 380.6) Licht emittiert wird.

## Revendications

1. Moteur électrique (500) ayant une boîte à bornes de moteur (510) et une unité de signalisation de diagnostic (150) au moins partiellement située à l'intérieur de la boîte à bornes de moteur (510), l'unité de signalisation de diagnostic (150) comprenant
- un dispositif de diagnostic (160) qui est configuré
- pour déterminer une condition de fonctionnement du moteur électrique (100), et
- pour fournir un signal de commande de sortie optique (162) indicatif de la condition de fonctionnement ;
- une unité de sortie optique (170) qui reçoit le signal de commande de sortie optique (162) et qui est configurée pour fournir un signal de sortie optique (172) selon le signal de commande de sortie optique (162) ; et **caractérisé en ce que** le moteur électrique comprend un élément optique transparent (570.1) pour diffuser le signal lumineux (172) vers un extérieur du moteur électrique (500), dans lequel l'élément optique transparent est un élément d'espacement optique transparent (570.1) qui est situé entre un corps de boîte à bornes (510.1) et un couvercle de boîte à bornes (510.2) de la boîte à bornes de moteur (510).

2. Moteur électrique (1000) selon la revendication 1, dans lequel l'unité de sortie optique (170) comprend une unité d'affichage (1070.1) qui reçoit le signal de commande de sortie optique (162) et est configurée pour afficher, en tant que signal de sortie optique (172), une visualisation de la condition de fonctionnement.

3. Moteur électrique selon la revendication 1 ou la revendication 2, dans lequel l'unité de sortie optique (170) comprend un dispositif luminescent qui est configuré pour émettre un signal lumineux infrarouge en tant que signal de sortie optique (172).

4. Moteur électrique (100) selon quelconques des revendications précédentes, dans lequel l'unité de sortie optique (270) comprend un dispositif luminescent (270.1-270.3) qui est configuré pour émettre un signal lumineux perceptible par humain en tant que signal de sortie optique (172).

5. Moteur électrique (100) selon la revendication 4, dans lequel
- le dispositif luminescent (170) est configuré pour émettre de la lumière en une pluralité de différentes couleurs, et
- le dispositif de diagnostic (160) est configuré pour fournir un signal de commande de sortie optique (162) tel que des informations concernant la condition de fonctionnement du moteur électrique (100) sont encodées dedans les différentes couleurs du signal lumineux (172) émis par le dispositif luminescent (170).

6. Moteur électrique (100) selon quelconques des revendications 3 à 5, dans lequel le dispositif de diagnostic (160) est configuré pour fournir un signal de commande de sortie optique (162) tel que des informations concernant la condition de fonctionnement du moteur électrique (100) sont encodées dans un modèle de modulation du signal lumineux (172) émis par le dispositif luminescent (170).

7. Moteur électrique (100) selon la revendication 6, dans lequel le modèle de modulation correspond à un modèle clignotant.

8. Moteur électrique (300) selon une quelconque revendication précédente, dans lequel
- la boîte à bornes de moteur (310) comprend une pluralité d'éléments optiques transparents (380.2, 380.4, 380.6),
- le dispositif luminescent (380) est configuré pour émettre sélectivement de la lumière à travers l'un quelconque des éléments optiques transparents (380.2, 380.4, 380.6), et
- le dispositif de diagnostic (360) est configuré pour fournir un tel signal de commande de sortie optique (362) de manière telle que des informations concernant la condition de fonctionnement sont encodées dans le modèle connexe à l'élément optique (380.2, 380.4, 380.6), des éléments optiques, à travers lequel de la lumière est émise.
